# EUROPEAN PATENT APPLICATION

(11) **EP 4 625 238 A1**
(43) Date of publication of application: **01.10.2025**
(21) Application number: 25165669.0
(22) Date of filing: 24.03.2025
(51) Int. Cl.: G06F 30/27, F26B 3/04, G06F 30/28

(54) **PROCESS SIMULATION SYSTEM AND METHOD**

(30) Priority: 25.03.2024 KR 20240040668
(71) Applicant: Samsung SDI Co., Ltd, Gyeonggi-do 17084 (KR)
(72) Inventor: KWON, YOUNGWOONG, 17084 Yongin-si, Gyeonggi-do (KR); KIM, BORA, 17084 Yongin-si, Gyeonggi-do (KR); MOON, GI JONG, 17084 Yongin-si, Gyeonggi-do (KR); JUNG, HEECHAN, 17084 Yongin-si, Gyeonggi-do (KR)
(74) Representative: Gulde & Partner

(57) **Abstract**

A process simulation system for a drying facility for drying an electrode plate of a rechargeable battery includes a process simulation device configured to perform a process simulation of the drying facility by using an artificial neural network-based simulation model. The simulation model may include a first artificial neural network configured to receive facility state data of the drying facility and predict fluid behavior in a fluid region of the drying facility from the facility state data, a second artificial neural network configured to receive the facility state data and predict a temperature in the fluid region, and a third artificial neural network configured to receive output from the first artificial neural network and the second artificial neural network, and predict a temperature on a boundary of the fluid region.

## Description

### CROSS-REFERENCE TO RELATED APPLICATION

This application claims priority to and the benefit of Korean Patent Application No. 10-2024-0040668 filed in the Korean Intellectual Property Office on March 25, 2024, the entire contents of which are incorporated herein by reference.

### BACKGROUND

### (a) Field

The present disclosure relates to a process simulation system and method. More particularly, the present disclosure relates to a process simulation system and method in an electrode plate drying facility for a rechargeable battery.

### (b) Description of the Related Art

A secondary battery is rechargeable, differing from a primary battery that is incapable of being recharged. Small-capacity rechargeable batteries may be used in portable small electronic devices such as smartphones, feature phones, laptop computers, digital cameras, and camcorders. Large-capacity rechargeable batteries may be used for motor driving power as electric power storage devices such as in hybrid vehicles or electric vehicles. A rechargeable battery may include an electrode assembly made of a positive electrode and a negative electrode, a case for receiving the electrode assembly, and an electrode terminal connected to the electrode assembly.

An electrode plate forming the positive electrode or the negative electrode of a rechargeable battery may be manufactured by applying an electrode active material to a surface of an electrode current collector in a metal thin film or metal mesh form. When a slurry is applied to the surface of the electrode current collector, a drying process may be performed to stably attach the electrode active material to the electrode current collector. A drying device for the electrode plate may, for example, transmit heat of a heater by an air supply fan into an electrode plate drying furnace to thereby dry the active material of the electrode plate.

The above-described information is disclosed with respect to technology related this disclosure and is only intended to improve understanding of the background of the present disclosure, and may therefore include information that does not constitute prior or conventional art.

### SUMMARY

The present disclosure provides a process simulation system and method for performing a process simulation according to a device state of a device configured to dry an electrode plate of a rechargeable battery, and reducing a simulation time.

Technical objects of the present disclosure are not limited by the above-described technical object, and technical objects that are described will be clearly comprehended by a person of ordinary skill in the art.

An embodiment of the present disclosure provides a process simulation system for a drying facility for drying an electrode plate of a rechargeable battery including a process simulation device configured to perform a process simulation of the drying facility by using an artificial neural network-based simulation model. The simulation model may include: a first artificial neural network configured to receive facility state data of the drying facility and predict fluid behavior in a fluid region of the drying facility from the facility state data; a second artificial neural network configured to receive the facility state data and predict a temperature in the fluid region; and a third artificial neural network configured to receive output from the first artificial neural network and the second artificial neural network, and predict a temperature on a boundary of the fluid region.

The process simulation device may be configured to output process simulation result data for the drying facility by using fluid behavior data and temperature data of the respective points of the drying facility that are predicted based on the simulation model.

The first artificial neural network may be trained by using fluid behavior simulation result data from the drying facility.

The second artificial neural network and the third artificial neural network may be configured with a physics-informed neural network. The second artificial neural network may be trained by using an advection-diffusion equation and a Navier-Stokes equation as governing equations. The third artificial neural network may be trained by using a temperature gradient equation as a governing equation.

The process simulation system may further include a detection device configured to measure an electrode plate temperature in the electrode plate drying facility.

The process simulation device may be further configured to obtain a prediction value of the electrode plate temperature from a prediction result of the second artificial neural network, compare a measurement value of the electrode plate temperature obtained by the detection device and the prediction value of the electrode plate temperature, and determine whether to re-train the simulation model.

If it is determined that the measurement value of the electrode plate temperature is different from the prediction value of the electrode plate temperature, the process simulation device may be configured to back-trace the boundary condition by using governing equations of the second artificial neural network and the third artificial neural network and re-train the simulation model by using the changed boundary condition.

The boundary condition may include a nozzle temperature of a heater operable as a heat source of the drying facility. The process simulation device may be further configured to re-predict the temperature in the fluid region by using the measurement value of the electrode plate temperature and a governing equations of the second artificial neural network, re-predict the temperature at the boundary by using the re-predicted temperature in the fluid region and a governing equation of the third artificial neural network, and obtain the changed nozzle temperature based on the re-predicted temperature at the boundary.

The process simulation system may further include a pre-learning device configured to build the simulation model.

The pre-learning device may be further configured to obtain fluid behavior simulation result data by simulating a fluid behavior in the drying facility by use of the facility state data, and train the first artificial neural network by using the fluid behavior simulation result data. The pre-learning device may be further configured to train the second artificial neural network by using the facility state data, a first boundary condition, and an advection-diffusion equation and a Navier-Stokes equation as governing equations. The pre-learning device may be further configured to train the third artificial neural network by using prediction results of the first and second artificial neural networks, a second boundary condition, and a temperature gradient equation as a governing equation. The pre-learning device may be further configured to build the simulation model by using the trained first artificial neural network, the trained second artificial neural network, and the trained third artificial neural network.

The first boundary condition may include a temperature at a fluid inlet of the fluid region. The second boundary condition may include a nozzle temperature of a heater operable as a heat source of the drying facility.

Another embodiment of the present disclosure provides a process simulation method for a drying facility for drying an electrode plate of a rechargeable battery including: obtaining fluid behavior data and temperature data predicted for points of the drying facility by using an artificial neural network-based simulation model; generating process simulation result data of the drying facility by using the predicted fluid behavior data and the predicted temperature data; and outputting the process simulation result data. The simulation model may include: a first artificial neural network configured to receive facility state data of the drying facility and predict a fluid behavior in a fluid region of the drying facility from the facility state data; a second artificial neural network configured to receive the facility state data and predict a temperature in the fluid region; and a third artificial neural network configured to receive output from the first artificial neural network and the second artificial neural network and predict a temperature on a boundary of the fluid region.

The process simulation method may further include obtaining fluid behavior simulation result data by simulating fluid behavior in the drying facility by using the facility state data and training the first artificial neural network by using the fluid behavior simulation result data.

The second artificial neural network and the third artificial neural network may be configured with a physics-informed neural network.

The process simulation method may further include training the second artificial neural network by using the facility state data, the first boundary condition, and the advection-diffusion equation and the Navier-Stokes equation as governing equations.

The first boundary condition may include a temperature in a fluid inlet of the fluid region.

The process simulation method may further include training the third artificial neural network by using prediction results of the first and second artificial neural networks, a second boundary condition, and a temperature gradient equation that is a governing equation. The second boundary condition may include a nozzle temperature of a heater operable as a heat source in the drying facility.

The process simulation method may further include obtaining a measurement value by measuring an electrode plate temperature in the electrode plate drying facility, obtaining a predicted value of the electrode plate temperature from a prediction result of the second artificial neural network, and determining whether to re-train the simulation model by comparing the measurement value and the predicted value.

The determining step may include determining whether to re-train the simulation model if it is determined that the measurement value is different from the predicted value.

The process simulation method may further include back-tracing a changed boundary condition by using governing equations of the second artificial neural network and the third artificial neural network if it is determined to re-train the simulation model, and re-training the simulation model by using the changed boundary condition.

The boundary condition may include a nozzle temperature of a heater operable as a heat source of the drying facility. The back-tracing may include re-predicting the temperature in the fluid region by using the measurement value and the governing equation of the second artificial neural network, re-predicting the temperature at the boundary of the fluid region by using the re-predicted temperature in the fluid region and the governing equation of the third artificial neural network, and obtaining the changed nozzle temperature based on the re-predicted temperature at the boundary of the fluid region.

According to the present disclosure, the process simulation may be possible according to a device state of the device configured to dry the electrode plate of the rechargeable battery, and the simulation time may be reduced.

The effects to be achieved by the present disclosure may not be limited to the aforementioned effects, and other unmentioned technical effects will be obviously understood by those skilled in the art from the description below.

### BRIEF DESCRIPTION OF THE DRAWINGS

The drawings appended to this specification illustrate embodiments of the present disclosure, which may be understood together with the following detailed description. But the present disclosure is not restricted to the matters illustrated in the drawings.
FIG. 1 shows a process simulation system according to an embodiment.
FIG. 2 shows a simulation model of a process simulation system according to an embodiment.
FIG. 3 shows a simulation model building method of a process simulation system according to an embodiment.
FIG. 4 shows a process simulation method of a process simulation system according to an embodiment.

### DETAILED DESCRIPTION OF THE EMBODIMENTS

Embodiments of the present disclosure will be described in detail with reference to the accompanying drawings. Terms or words used in the present specification and claims should not be interpreted as being limited to typical or dictionary meanings, but should be interpreted as having meanings and concepts which comply with the technical spirit of the present disclosure, based on the principle that an inventor can appropriately define the concept of the terms to describe his/her own invention in the best manner. Therefore, configurations illustrated in the embodiments and the drawings described in the present specification are only the most preferred embodiment of the present disclosure and do not represent all of the technical spirit of the present disclosure. Thus, it is to be understood that various equivalents and modified examples, which may replace the configurations, are possible. If used in the present specification, "comprise and include" and/or "comprising and including" may specify the existence of the mentioned shapes, numbers, steps, operations, members, elements and/or these groups, and may not exclude the presence or addition of one or more other shapes, numbers, movements, members, elements and/or groups. If embodiments of the present disclosure are described, "may perform" and "may be" may include "one or more embodiments of the present disclosure".

To aid understanding of the disclosure, the attached drawings may not be drawn to actual scales, as the dimensions of some components may be exaggerated. The same reference number may be assigned to the same component in another embodiment.

The statement that two comparison objects are 'the same' may mean 'substantially the same'. Therefore, the substantial sameness may include a case, for example, where the deviation is within 5%, which is considered low in the related industry. Uniformity of a parameter in a given region may mean uniformity from an average perspective.

Although first, second, etc., are used to describe various components, the components may not be limited by these terms. These terms are only used to distinguish one component from another, and unless specifically stated to the contrary, the first component may also be the second component.

Throughout the specification, unless otherwise stated, each component may be singular or plural.

The placement of any components on a "upper portion (or a lower portion)" of a component or the "top (or bottom)" of a component may mean that any component is placed in contact with the top (or bottom) of the component. This may mean that other configurations may be interposed between and any configuration placed on (or under) the component.

It should be understood that if a component is described as "connected to" or "coupled to" another component, the components may be directly connected or accessed to each other, but other components may be "interposed" between the respective components, or the respective components may be connected, combined, or accessed to each other through other components. If it is described that an element is "electrically coupled" to another element, the element may be directly coupled to the other element or coupled to the other element through a third element.

"A and/or B" throughout the specification may mean A, B or A and B unless there is a special opposing statement. That is, "and/or" may include the entire combinations or arbitrary combinations of the items. "C to D" may mean that it is higher than C and lower than D unless there is a special opposing statement.

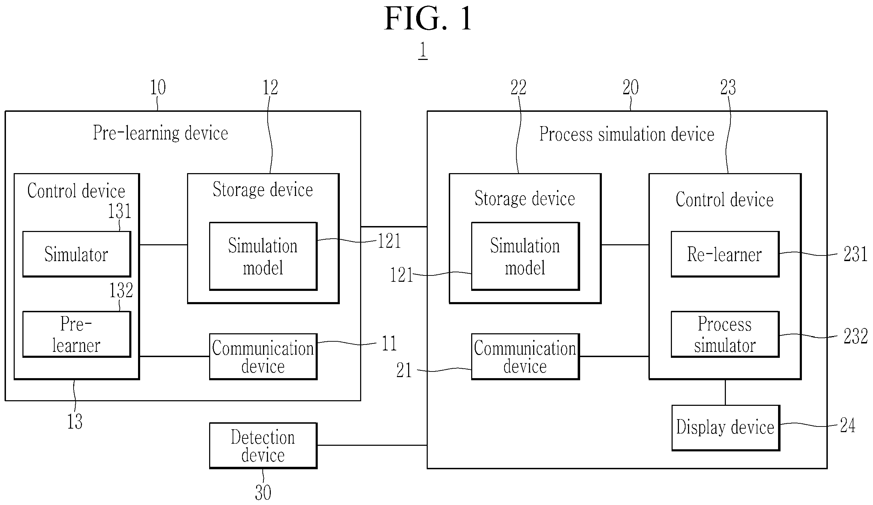

FIG. 1 shows a process simulation system according to an embodiment.

The process simulation system 1 may allow a drying facility (referred to as an electrode plate drying facility) for drying an electrode plate of a rechargeable battery to generate a prediction using a process simulation.

Referring to FIG. 1, the process simulation system 1 may include a pre-learning device 10, a process simulation device 20, and a detection device 30.

The pre-learning device 10 may build a simulation model 121 for generating the process simulation result through pre-learning. The pre-learning device 10 may include a communication device 11, a storage device 12, and a control device 13.

The communication device 11 may perform a communication function between the pre-learning device 10 and an external device such as the process simulation device 20.

The storage device 12 may store various data and information processed by the pre-learning device 10. The storage device 12 may store study data for training the simulation model 121 (described below). The storage device 12 may store the simulation model 121 built by the pre-learning device 10. The storage device 12 may store a program for an operation of the control device 13.

The control device 13 may control general operation of the pre-learning device 10. The control device 13 may include a simulator 131 and a pre-learner 132.

The simulator 131 may simulate a fluid behavior of the electrode plate drying facility. In the electrode plate drying facility, heat energy discharged by a heat source (e.g., a heater) may heat air, and the heated air may move toward the battery electrode plate by a circulation device such as a fan to dry the battery electrode plate. The air flow may be influenced by device states such as driving states (e.g., fluid inflow amount, outputs of a fan, etc.) of the electrode plate drying facility, or shapes of the electrode plate drying facility. Therefore, the simulator 131 may simulate fluid behavior in the electrode plate drying facility based on facility state data including shape data and driving state data of the electrode plate drying facility. The shape data of the electrode plate drying facility may include data such as a shape of an internal space in which the electrode plate is located, a shape of a passage (e.g., duct) through which air heated by the heat source passes in the electrode plate drying facility, and a shape of equipment of the electrode plate drying facility.

The simulator 131 may obtain simulation data in mesh data form indicating the fluid behavior (speed, pressure, density, etc.,) at respective points in the electrode plate drying facility based on the simulation.

The simulator 131 may store the obtained simulation result data (fluid behavior data at respective points) and facility state data input in the storage device 12 as study data.

The pre-learner 132 may build an artificial neural network-based simulation model 121 for generating a process simulation result of the electrode plate drying facility through the machine learning-based pre-learning.

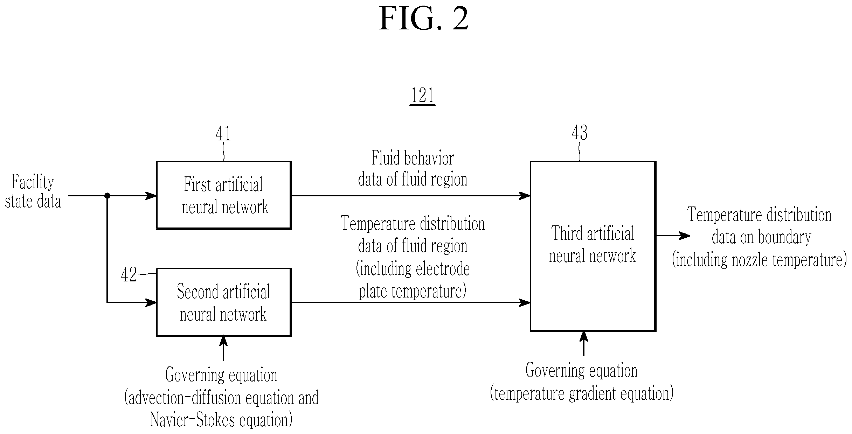

FIG. 2 shows a simulation model according to an embodiment.

Referring to FIG. 2, the simulation model 121 may be built with a first artificial neural network 41 for predicting a fluid behavior in the fluid region, a second artificial neural network 42 for predicting a temperature in the fluid region, and a third artificial neural network 43 for predicting a temperature on a boundary of the fluid region.

The first artificial neural network 41 may be used to learn a relationship between the facility state data (e.g., shape data, driving state data, etc., of the fluid region) of the electrode plate drying facility and the fluid behavior, and predict the fluid behavior of the electrode plate drying facility. The first artificial neural network 41 may receive the facility state data of the electrode plate drying facility, may predict a fluid behavior, and may output the fluid behavior prediction. The fluid behavior prediction output by the first artificial neural network 41 may include fluid characteristic data (fluid speeds, fluid pressures, etc.) predicted for respective points in the fluid region.

The pre-learner 132 may train the first artificial neural network 41 by using the facility state data used in the simulation of the simulator 131 and the corresponding simulation result data (fluid behavior data) as study data.

The second artificial neural network 42 may be used to learn correlation between the facility state data (e.g., shape data, driving state data, etc., of the fluid region) of the electrode plate drying facility and the fluid temperature, and the second artificial neural network 42 may predict the temperature in the fluid region of the electrode plate drying facility. The second artificial neural network 42 may receive the facility state data of the electrode plate drying facility, may predict the temperature in the fluid region therefrom, and may output the predicted temperature. The temperature prediction output by the second artificial neural network 42 may include temperature data predicted for the respective points in the fluid region.

The second artificial neural network 42 may be configured with a physics-informed neural network (PINN) using an advection-diffusion equation and a Navier-Stokes equation as governing equations. The Navier-Stokes equation may analyze the behavior of the fluid in the fluid region, and the advection-diffusion equation may analyze thermal propagation according to the fluid behavior.

The pre-learner 132 may train the second artificial neural network 42 by using the facility state data of the electrode plate drying facility and the governing equations. The pre-learner 132 may use the established fluid temperature and the fluid speed of the fluid inlet as boundary conditions when training the second artificial neural network 42. For better understanding and ease of description, the fluid temperature at the fluid inlet will now be referred to as a fluid inflow temperature.

The third artificial neural network 43 may be used to learn the relationship between the fluid behavior and the temperature in the fluid region of the electrode plate drying facility and the temperature at the boundary of the fluid region, and the third artificial neural network 43 predict the temperature at the boundary of the fluid region. The third artificial neural network 43 may receive the prediction results (the fluid behavior data and the temperature data in the fluid region) of the first artificial neural network 41 and the second artificial neural network 42. The third artificial neural network 43 may predict the temperature at the boundary of the fluid region from the input prediction result and may output the predicted temperature. The predicted temperature output by the third artificial neural network 43 may include the temperature data predicted for the respective points in the boundary of the fluid region.

The third artificial neural network 43 may be configured with the PINN using the temperature gradient equation as a governing equation.

The pre-learner 132 may train the third artificial neural network 43 by using the outputs of the artificial neural networks 41 and 42 and the governing equations. The pre-learner 132 may use an established nozzle temperature as the boundary condition when learning the third artificial neural network 43.

According to what is described above, after receiving the facility state data of the electrode plate drying facility, the simulation model 121 may predict the fluid behavior and the temperature in the fluid region of the electrode plate drying facility, and the simulation model 121 may predict the temperature at the boundary of the fluid region. The simulation model 121 may output the predicted results as process simulation data for the electrode plate drying facility.

Referring again to FIG. 1, the simulation model 121 trained by the pre-learner 132 may be stored in the storage device 12. The simulation model 121 may be transmitted to the process simulation device 20 to predict process factors in the actual electrode plate drying facility.

Regarding the pre-learning device 10, the control device 13 may include at least one processor. The processor may be a data processing device with a physically structured circuit for performing functions (e.g., functions of the simulator 131 and the pre-learner 132) expressed as codes or instructions included in the program such as a microprocessor, a central processing unit (CPU), a processor core, a multiprocessor, an application-specific integrated circuit (ASIC), or a field programmable gate array (FPGA).

The process simulation device 20 may receive the simulation model 121 trained by the pre-learning device 10, and may re-train the simulation model 121 according to a process setting of the actual electrode plate drying facility. The process simulation device 20 may produce the process simulation result according to the process setting of the electrode plate drying facility by using the trained simulation model 121.

The process simulation device 20 may include a communication device 21, a storage device 22, a control device 23, and a display device 24.

The communication device 21 may perform communication functions between the process simulation device 20 and external devices (e.g., the pre-learning device 10, the detection device 30, etc.).

The storage device 22 may store various data and information processed by the process simulation device 20. The storage device 22 may store the simulation model 121 provided by the pre-learning device 10. The storage device 22 may store a program for an operation of the control device 23.

The control device 23 may control general operation of the process simulation device 20. The control device 23 may include a re-learner 231 and a process simulator 232.

The re-learner 231 may obtain the electrode plate temperature data measured by the actual electrode plate drying facility through the detection device 30. The detection device 30 may include a temperature sensor contacting the battery electrode plate or disposed near the battery electrode plate in the electrode plate drying facility, and the detection device 30 may measure the temperature of the battery electrode plate by using the temperature sensor.

The re-learner 231 may obtain the predicted electrode plate temperature data based on the simulation model 121. The temperature of the battery electrode plate may be very similar to or equal to the fluid temperature around the battery electrode plate. Therefore, the re-learner 231 may use the fluid temperature around the battery electrode plate predicted by the simulation model 121 as an electrode plate temperature predicting value. The fluid temperature around the battery electrode plate may be the value predicted by the second artificial neural network 42 of the simulation model 121 described with reference to FIG. 2.

The re-learner 231 may compare the electrode plate temperature data measured by the detection device 30 and the electrode plate temperature data predicted using the simulation model 121 and may determine whether to re-learn the simulation model 121. The re-learner 231 may determine that the boundary condition used in pre-learning the simulation model 121 is different from a process factor setting in the actual electrode plate drying facility if the measured electrode plate temperature data is different from the predicted electrode plate temperature data. The re-learner 231 may re-train the simulation model 121 according to the changed setting if the boundary condition applied to the pre-learning of the simulation model 121 is determined to be different from the process factor setting value of the actual electrode plate drying facility.

The re-learner 231 may back-trace the setting-changed process factor to re-learn the simulation model 121. The re-learner 231 may back-trace the setting-changed process factor by using the governing equation applied to the simulation model 121. To back-trace the process factor, the re-learner 231 may predict the temperature data in the fluid region by using the governing equations (the advection-diffusion equation and the Navier-Stokes equation) used in predicting the temperature in the fluid region in the simulation model 121 and the electrode plate temperature data detected by the detection device 30. The re-learner 231 may assume that the fluid behavior and the fluid inflow temperature that is a boundary condition in the fluid region correspond to the case of pre-learning the simulation model 121. The re-learner 231 may predict the temperature data on the boundary of the fluid region by using the governing equation (temperature gradient equation) used in predicting the temperature at the boundary of the fluid region in the simulation model 121, and the temperature data in the fluid region predicted for the back-trace.

The re-learner 231 may obtain a changed nozzle temperature by re-predicting the temperature data on the boundary of the fluid region. A nozzle of the heater may be disposed on the boundary of the fluid region in the electrode plate drying facility. Therefore, the re-learner 231 may obtain the changed nozzle temperature based on the temperature data on the boundary of the re-predicted fluid region. The re-learner 231 may change the boundary condition of the simulation model 121 according to a changed nozzle temperature if the change in the nozzle temperature is confirmed. For a non-limiting example, the re-learner 231 may change the nozzle temperature value configuring the boundary condition by using the changed nozzle temperature.

The re-learner 231 may re-train the simulation model 121 by using the changed boundary condition if the changed boundary condition is confirmed. The re-learner 231 may store the re-trained simulation model 121 in the storage device 22 when the re-training ends.

The process simulator 232 may generate the simulation result satisfying the process setting of the actual electrode plate drying facility by using the simulation model 121 if it is determined as that the re-training of the simulation model 121 ends and that there is no need to re-learn the simulation model 121. For a non-limiting example, the process simulator 232 may predict the fluid behavior and the temperature for respective points (the respective points in the fluid region, and the respective points on the boundary of the fluid region) in the electrode plate drying facility by using the simulation model 121. The process simulator 232 may generate the process simulation result data by using the predicted values. If the process simulation result data is generated, the process simulator 232 may display the generated process simulation result data on the display device 24.

The control device 23 may include at least one processor. The processor may be a data processing device with a physically structured circuit for performing functions (e.g., functions of the re-learner 231 and the process simulator 232) expressed as codes or instructions included in the program such as the microprocessor, the central processing unit (CPU), the processor core, the multiprocessor, the ASIC, or the FPGA.

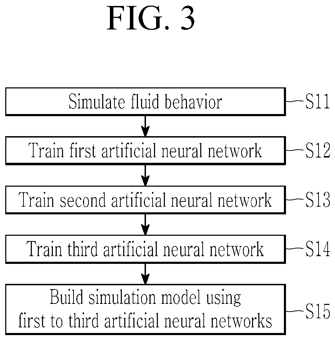

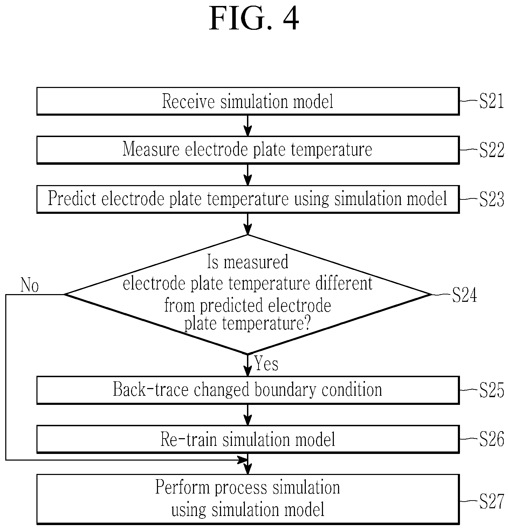

A process simulation method of an electrode plate drying facility in a process simulation system 1 according to an embodiment will now be described with reference to FIG. 3 and FIG. 4.

FIG. 3 shows a method for building a simulation model for a process simulation in a process simulation system 1 according to an embodiment. The method of FIG. 3 may be performed by the pre-learning device 10 of the process simulation system 1 described with reference to FIG. 1 and FIG. 2.

Referring to FIG. 3, the pre-learning device 10 of the process simulation system 1 may simulate the fluid behavior in the electrode plate drying facility (step S11). At step S11, the pre-learning device 10 may simulate the fluid behavior in the electrode plate drying facility based on the facility state data including the shape data and the driving state data of the electrode plate drying facility. The pre-learning device 10 may obtain the simulation data in a mesh data form that indicates the fluid behaviors (speed, pressure, density, etc.,) at the respective points in the electrode plate drying facility based on the simulation.

The pre-learning device 10 may train the first artificial neural network 41 of the simulation model 121 by using the simulation result data obtained at step S11 and the facility state data used to obtain the same as study data (step S12). At step S12, the first artificial neural network 41 may learn the relationship between the facility state data of the electrode plate drying facility and the fluid behavior. The learning-completed first artificial neural network 41 may predict a fluid behavior and may output the prediction if receiving the facility state data of the electrode plate drying facility.

The pre-learning device 10 may train the second artificial neural network 42 of the simulation model 121 by using the facility state data of the electrode plate drying facility and the governing equations (step S13). At step S13, the second artificial neural network 42 may learn the correlation between the facility state data of the electrode plate drying facility and the fluid temperature. The second artificial neural network 42 may be configured with the PINN, and the advection-diffusion equation and the Navier-Stokes equation may be used as the governing equations for the purpose of the learning of the second artificial neural network 42. The second artificial neural network 42 may be used to predict the temperature in the fluid region of the electrode plate drying facility. The learning-completed second artificial neural network 42 may predict the temperature in the fluid region and may output the prediction if receiving the facility state data of the electrode plate drying facility.

The pre-learning device 10 may train the third artificial neural network 43 of the simulation model 121 by using the prediction results of the first and second artificial neural networks 42 and the governing equation (step S14). At step S14, the third artificial neural network 43 may learn the relationship between the fluid behavior and the temperature in the fluid region of the electrode plate drying facility and the temperature at the boundary of the fluid region. The third artificial neural network 43 may be configured with the PINN, and the temperature gradient equation may be used as the governing equation for the purpose of the learning of the third artificial neural network 43. The learning-completed third artificial neural network 43 may predict a temperature at the boundary of the fluid region from the prediction results of the first and second artificial neural networks 41 and 42 and may output the prediction.

The pre-learning device 10 may build the simulation model 121 for a process simulation by using the first to third artificial neural networks 41 to 43 if the training of the first to third artificial neural networks 41 to 43 ends (step S15). The simulation model 121 built according to S15 may predict the fluid behavior and the temperature in the fluid region of the electrode plate drying facility, and the temperature at the boundary of the fluid region if receiving the facility state data of the electrode plate drying facility.

FIG. 4 shows a method for simulating an electrode plate drying facility by using a simulation model in a process simulation system 1 according to an embodiment. The method of FIG. 4 may be performed by the process simulation device 20 of the process simulation system 1 described with reference to FIG. 1 and FIG. 2.

Referring to FIG. 4, the process simulation device 20 of the process simulation system 1 according to an embodiment may receive the simulation model 121 built by the pre-learning device 10 (step S21).

The process simulation device 20 may measure the actual electrode plate temperature of the electrode plate drying facility by using the detection device 30 (step S22). The process simulation device 20 may predict the electrode plate temperature by using the simulation model 121 (step S23). At step S23, the process simulation device 20 may obtain the fluid temperature around the battery electrode plate predicted by the simulation model 121 as the electrode plate temperature.

The process simulation device 20 may check whether the electrode plate temperature measured at step S22 is different from the electrode plate temperature predicted at step S23 to determine whether to re-train the simulation model 121 (step S24). At step S24, to prevent unnecessary re-learning, the process simulation device 20 may determine as that the two electrode plate temperatures are different from each other if a difference between the measured electrode plate temperature and the predicted electrode plate temperature is equal to greater than a predetermined value.

The process simulation device 20 may back-trace the changed boundary condition to re-train the simulation model 121 if the electrode plate temperature measured at step S22 is determined to be different from the electrode plate temperature predicted at step S23 (step S25).

At step S25, it is assumed that, regarding the process simulation device 20, the fluid behavior and the fluid inflow temperature that is a boundary condition in the fluid region are equal to the case of pre-learning of the simulation model 121 at the time of back-trace. With this assumption, the process simulation device 20 may re-predict the temperature data in the fluid region by using the governing equations (the advection-diffusion equation and the Navier-Stokes equation) used to predict the temperature in the fluid region in the simulation model 121 and the electrode plate temperature measured by the detection device 30. The process simulation device 20 may re-predict the temperature data on the boundary of the fluid region by using the re-predicted temperature data in the fluid region, and the governing equation (temperature gradient equation) used to predict the temperature on the boundary of the fluid region in the simulation model 121. The process simulation device 20 may obtain the nozzle temperature that is the changed boundary condition if the temperature data on the boundary of the fluid region are re-predicted.

The process simulation device 20 may re-train the simulation model 121 when obtaining the changed boundary condition through the back-trace at step S25 (step S26).

The process simulation device 20 may, if the electrode plate temperature measured at S24 is determined to be not different from the predicted electrode plate temperature, determine as that the re-training of the simulation model 121 is not needed, and may omit the steps S25 and S26.

The process simulation device 20 may perform a process simulation of the electrode plate drying facility by using the simulation model 121 if it is determined as that the re-training of the simulation model 121 ends through steps S25 and S26 or there is no need to re-train the simulation model 121 through step S24 (step S27). At step S27, the process simulation device 20 may predict the fluid flow and the temperature at the respective points of the electrode plate drying facility by using the simulation model 121, and may output the process simulation result data of the electrode plate drying facility by using the predicted data.

While this disclosure has been described in connection with what is presently considered to be practical exemplary embodiments, it is to be understood that the disclosure is not limited to the disclosed embodiments. On the contrary, the disclosure cover various modifications and equivalent arrangements.

### <Description of symbols>

1: process simulation system
10: pre-learning device
11: communication device of pre-learning device
12: storage device of pre-learning device
121: simulation model
13: control device of pre-learning device
131: simulator
132: pre-learner
20: process simulation device
21: communication device of process simulation device
22: storage device of process simulation device
23: control device of process simulation device
231: re-learner
232: process simulator
24: display device
30: detection device
41: first artificial neural network
42: second artificial neural network
43: third artificial neural network

## Claims

1. A process simulation system (1) for a drying facility for drying an electrode plate of a rechargeable battery, the process simulation system (1) comprising:
a process simulation device (20) configured to perform a process simulation of the drying facility by using an artificial neural network-based simulation model (121),
wherein the simulation model (121) includes:
a first artificial neural network (41) configured to receive facility state data of the drying facility and predict fluid behavior in a fluid region of the drying facility from the facility state data,
a second artificial neural network (41, 42) configured to receive the facility state data and predict a temperature in the fluid region, and
a third artificial neural network (43) configured to receive output from the first artificial neural network (41) and the second artificial neural network (41, 42) and predict a temperature of a boundary of the fluid region, and
wherein the process simulation device (20) is configured to output process simulation result data for the drying facility by using fluid behavior data and temperature data of the respective points of the drying facility that are predicted based on the simulation model (121).

2. The process simulation system (1) as claimed in claim 1, wherein the first artificial neural network (41) is trained by using fluid behavior simulation result data from the drying facility.

3. The process simulation system (1) as claimed in claim 1 or 2, wherein the second artificial neural network (41, 42) and the third artificial neural network (43) are configured with a physics-informed neural network.

4. The process simulation system (1) as claimed in claim 3, wherein the second artificial neural network (41, 42) is trained by using an advection-diffusion equation and a Navier-Stokes equation as governing equations.

5. The process simulation system (1) as claimed in claim 3 or 4, wherein the third artificial neural network (43) is trained by using a temperature gradient equation as a governing equation.

6. The process simulation system (1) as claimed in claims 3 to 5, further comprising a detection device (30) configured to measure an electrode plate temperature in the drying facility,
wherein the process simulation device (20) is further configured to obtain a predicted value of the electrode plate temperature from a prediction result of the second artificial neural network (41, 42), compare a measurement value of the electrode plate temperature obtained by the detection device (30) and the predicted value of the electrode plate temperature, and determine whether to re-train the simulation model (121) and/or
wherein, when it is determined that the measurement value of the electrode plate temperature is different from the predicted value of the electrode plate temperature, the process simulation device (20) is configured to back-trace a boundary condition by using governing equations of the second artificial neural network (41, 42) and the third artificial neural network (43) and re-train the simulation model (121) by using the changed boundary condition
and/or wherein the boundary condition includes a nozzle temperature of a heater operable as a heat source of the drying facility, and wherein the process simulation device (20) is further configured to re-predict the temperature in the fluid region by using the measurement value of the electrode plate temperature and governing equations of the second artificial neural network (41, 42), re-predict the temperature at the boundary by using the re-predicted temperature in the fluid region and a governing equation of the third artificial neural network (43), and obtain the changed nozzle temperature based on the re-predicted temperature at the boundary.

7. The process simulation system (1) as claimed in claims 3 to 6, further comprising:
a pre-learning device (10) configured to build the simulation model (121),
wherein the pre-learning device (10) is further configured to:
obtain fluid behavior simulation result data by simulating fluid behavior in the drying facility by use of the facility state data;
train the first artificial neural network (41) by using the fluid behavior simulation result data;
train the second artificial neural network (41, 42) by using the facility state data, a first boundary condition, and an advection-diffusion equation and a Navier-Stokes equation as governing equations;
train the third artificial neural network (43) by using prediction results of the first and second artificial neural networks (41, 42), a second boundary condition, and a temperature gradient equation as a governing equation; and
build the simulation model (121) by using the trained first artificial neural network (41), the trained second artificial neural network (41, 42), and the trained third artificial neural network (43)
and/or wherein the first boundary condition includes a temperature at a fluid inlet of the fluid region, and
wherein the second boundary condition includes a nozzle temperature of a heater operable as a heat source of the drying facility.

8. A process simulation method for a drying facility for drying an electrode plate of a rechargeable battery, the process simulation method comprising:
obtaining fluid behavior data and temperature data predicted for points of the drying facility by using an artificial neural network-based simulation model (121);
generating process simulation result data of the drying facility by using the predicted fluid behavior data and the predicted temperature data; and
outputting the process simulation result data,
wherein the simulation model (121) includes:
a first artificial neural network (41) configured to receive facility state data of the drying facility and predict a fluid behavior in a fluid region of the drying facility from the facility state data,
a second artificial neural network (41, 42) configured to receive the facility state data and predict a temperature in the fluid region, and
a third artificial neural network (43) configured to receive output from the first artificial neural network (41) and the second artificial neural network (41, 42) and predict a temperature on a boundary of the fluid region.

9. The process simulation method as claimed in claim 8, further comprising:
obtaining fluid behavior simulation result data by simulating fluid behavior in the drying facility by using the facility state data (S11); and
training the first artificial neural network (41) by using the fluid behavior simulation result data (S12).

10. The process simulation method as claimed in claim 8 or 9, wherein the second artificial neural network (41, 42) and the third artificial neural network (43) are configured with a physics-informed neural network.

11. The process simulation method as claimed in claim 10, further comprising:
training the second artificial neural network (41, 42) by using the facility state data (S13), the first boundary condition, and the advection-diffusion equation and the Navier-Stokes equation as governing equations,
wherein the first boundary condition includes a temperature in a fluid inlet of the fluid region.

12. The process simulation method as claimed in claim 10 or 11, further comprising:
training the third artificial neural network (43) by using prediction results of the first and second artificial neural networks (41, 42) (S14), a second boundary condition, and a temperature gradient equation that is a governing equation,
wherein the second boundary condition includes a nozzle temperature of a heater operable as a heat source in the drying facility.

13. The process simulation method as claimed in claims 10 to 12, further comprising:
obtaining a measurement value by measuring an electrode plate temperature in the electrode plate drying facility,
obtaining a predicted value of the electrode plate temperature from a prediction result of the second artificial neural network (41, 42), and
determining whether to re-train the simulation model (121) by comparing the measurement value and the predicted value.

14. The process simulation method as claimed in claim 13, wherein the determining step includes determining whether to re-train the simulation model (121) if it is determined that the measurement value is different from the predicted value.

15. The process simulation method as claimed in claim 13, further comprising:
back-tracing a changed boundary condition by using governing equations of the second artificial neural network (41, 42) and the third artificial neural network (43) if it is determined to retrain the simulation model (121), and
re-training the simulation model (121) by using the changed boundary condition
and/or wherein the boundary condition includes a nozzle temperature of a heater operable as a heat source of the drying facility, and
wherein the back-tracing includes:
re-predicting the temperature in the fluid region by using the measurement value and the governing equations of the second artificial neural network (41, 42);
re-predicting the temperature at the boundary of the fluid region by using the re-predicted temperature in the fluid region and the governing equation of the third artificial neural network (43); and
obtaining the changed nozzle temperature based on the re-predicted temperature at the boundary of the fluid region.
